# EUROPÄISCHE PATENTSCHRIFT

(11) **EP 0 424 735 B1**
(45) Veröffentlichungstag und Bekanntmachung des Hinweises auf die Patenterteilung: **14.12.1994**
(21) Anmeldenummer: 90119464.7
(22) Anmeldetag: 11.10.1990
(51) Int. Cl.: G01L 1/12, G01P 15/08, G01P 1/00

(54) **Geber zum Messen mechanischer Kräfte**
Transmitter for measuring mechanical forces
Transmetteur pour la mesure des forces mécaniques

(30) Priorität: 24.10.1989 DE 8912560 U
(43) Veröffentlichungstag der Anmeldung: 02.05.1991
(73) Patentinhaber: Mannesmann Kienzle GmbH (HR B1220), 78052 Villingen-Schwenningen (DE)
(72) Erfinder: Hilger, Gernot, Dipl.-Phys., W-7218 Trossingen (DE); Schmid, Mechtilde, Dipl.-Ing. (FH), W-7730 Villingen-Schwenningen (DE)

(56) Entgegenhaltungen:
- EP-A- 0 036 532
- DE-U- 8 909 652

## Beschreibung

Die Erfindung betrifft einen Geber zum Messen mechanischer Kräfte mit einem bandförmigen Meßkörper aus amorphem, magnetoelastischen Metall, welcher mit einer Spulenanordnung elektromagnetisch gekoppelt und unter Vorspannung zwischen relativ zueinander beweglichen Bauteilen des Gebers angeordnet ist.

Die hohe mechanische Belastbarkeit und Lastwechselfestigkeit eines derartigen Meßkörpers, das erzielbare vergleichsweise hohe Meßsignal und die Korrosionsbeständigkeit, aber auch die Tatsache, daß der Meßkörper als äußerst dünnes Band in einer Größenordnung von 20 bis 30 µm, d. h. extrem massearm hergestellt werden kann, machen derartige Geber für rauhe Betriebsbedingungen, beispielsweise für den Einsatz als Beschleunigungsgeber in Kraftfahrzeugen, geeignet.

Erhebliche Schwierigkeiten, insbesondere was das Langzeitverhalten unter Vorspannung und Stoßbelastungen anbelangt, bereitete bisher die Befestigung der Enden des bandförmigen Meßkörpers an den kraftübertragenden und relativ zueinander beweglichen Bauteilen derartiger Geber. Selbst bei Anwendung spezieller Laserschweißverfahren kann eine Rekristallisation und somit ein Verlust der speziellen Eigenschaften des amorphen Materials nicht verhindert werden. Einpressungen, Klebeverbindungen und Einspannungen mittels geeigneter Klemmstücke sind nicht zuletzt wegen der extrem geringen Rauhigkeit des Bandmaterials nicht ausreichend kriechfest. Punkt- bzw. linienförmige Klemmverbindungen, die eine Kerbwirkung ausüben, sind nur ungenügend stoßbelastbar.

Einen zufriedenstellenden Ansatz zur Befestigung der Enden des Meßkörpers bietet demgegenüber der Gedanke der Bildung eines Bandwickels mit mehreren Windungen, die sich unter der Wirkung der erforderlichen Vorspannung aufeinander festziehen.

Vorteilhaft ist bei dieser Lösung, daß an der außenliegenden Einlaufstelle der Meßkörper mit einem relativ großen Radius knickfrei zum Bandwickel umgelenkt wird und durch Verwendung eines drehbar gelagerten Wickelkörpers eine einfache und feinfühlige Justiermöglichkeit gegeben ist.

Um Schlupf beim Wickeln des Meßkörpers zu vermeiden, ist es gemäß der DE-U-89 09 652 bekannt, das Ende des Meßkörpers in einen in den Wickelkörper vorgesehenen axialen Schlitz einzufädeln und mittels einer Schraube oder eines Keiles zu sichern. Zweifellos ist eine solche Lösung sowohl bei der Herstellung der verhältnismäßig kleinen Wickelkörper als auch bei der Montage des Meßkörpers aufwendig und zeitraubend und wird in keiner Weise den Anforderungen einer Großserienfertigung gerecht.

Der vorliegenden Erfindung war somit die Aufgabe gestellt, eine für die Großserienfertigung geeignete Befestigung eines bandförmigen Meßkörpers zu schaffen.

Die Lösung der Aufgabe sieht vor, daß zur Befestigung des Meßkörpers zwei Wickelkörper vorgesehen sind, auf denen jeweils ein Ende des Meßkörpers aufgewickelt ist und daß jeder Wickelkörper wenigstens in einem bestimmten axialen Abschnitt aus zwei mittels eines Filmscharniers miteinander in Verbindung stehenden Teilen gebildet ist und an den einander zugewandten Flächen der relativ zueinander beweglichen Wickelkörperteile eine Kerbverzahnung bildende Rippen und Kerben ausgebildet sind.

Weitere vorteilhafte Ausbildungen beschreiben die hier nicht zitierten Unteransprüche.

Die Erfindung bietet den Vorteil, daß die Wickelkörper selbst und die Mittel zum Befestigen der Enden des Meßkörpers spritzgußtechnisch herstellbar sind und eine Aufnahme und ein sicheres Festhalten des Meßkörpers ohne die Verwendung zusätzlicher Bauteile und ohne die Anwendung von Werkzeugen ermöglicht ist. Ferner eignet sich die Erfindung für eine weitgehende Miniaturisierung der Befestigungsmittel des Meßkörpers und somit des Gebers an sich.

Im folgenden sei die Erfindung anhand der beigefügten Zeichnungen erläutert. Es zeigen:
FIGUR 1 eine perspektivische Darstellung eines ersten für die Justierung des Meßkörpers ausgebildeten Wickelkörpers,
FIGUR 2 einen Schnitt des Wickelkörpers gemäß der Schnittlinie AB in FIGUR 1 mit einer Ansicht eines zur Befestigung zugeführten Endes eines Meßkörpers
FIGUR 3 eine perspektivische Darstellung eines zweiten für eine starre Zuordnung zu dem betreffenden Bauteil des Gebers ausgebildeten Wickelkörpers
FIGUR 4 eine perspektivische Darstellung des Wickelkörpers gemäß FIGUR 1 mit aufgewickeltem Meßkörper
FIGUR 5 ein Einbaubeispiel eines Wickelkörpers gemäß FIGUR 1 in einem Beschleunigungsgeber.

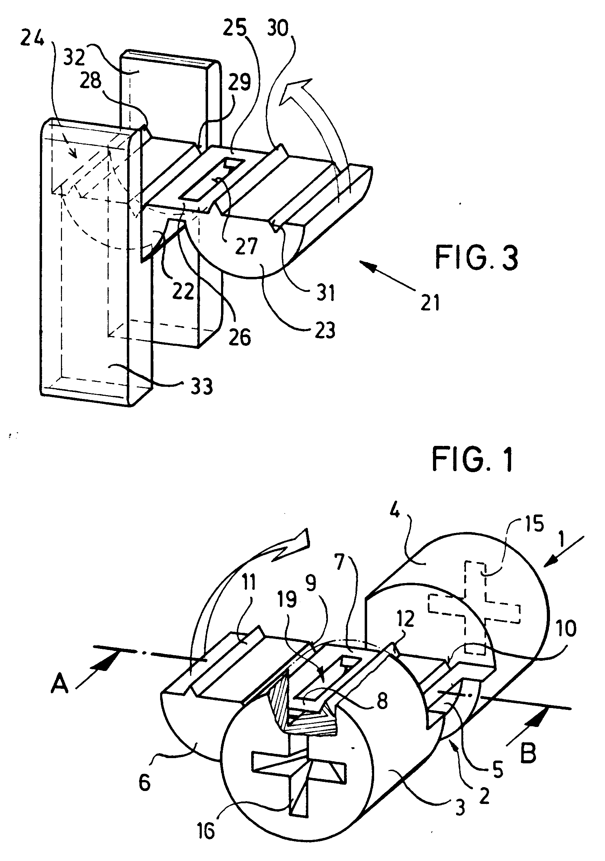

Der Wickelkörper 1 gemäß FIGUR 1 ist im wesentlichen zylindrisch ausgebildet, d. h. er besteht aus einem mittleren Abschnitt 2 mit beidseitig angeformten Wellenstümpfen 3 und 4, deren Durchmesser größer ist als der Durchmesser des mittleren Abschnitts. Auf diese Weise ist sowohl eine seitliche Führung für das Meßkörperband gebildet als auch eine in Bezug auf den Lagerdurchmesser des Wickelkörpers 1 "versenkte" Anordnung des zu bildenden Bandwickels und des, im folgenden noch näher zu beschreibenden, dem mittleren Abschnitt 2 zugeordneten Scharniers geschaffen.

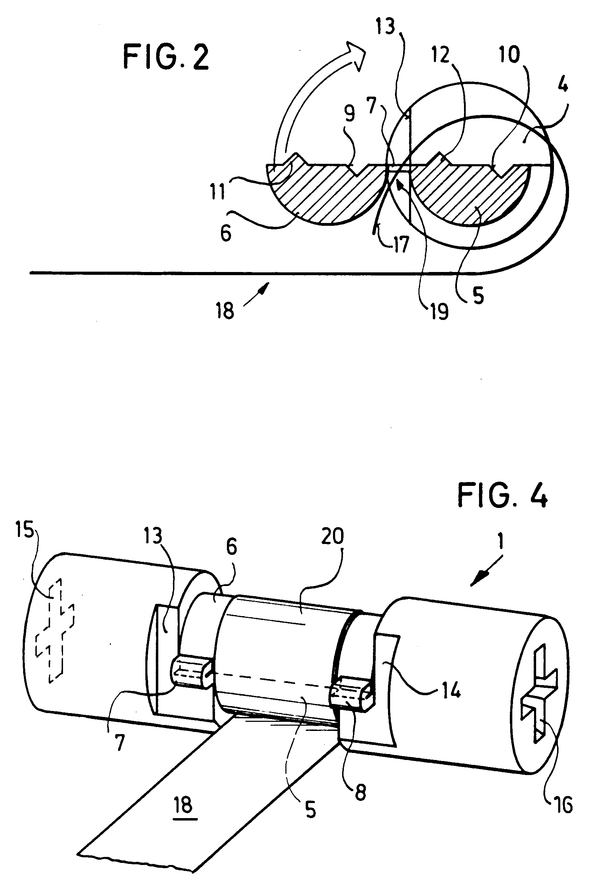

Wie aus FIGUR 1, insbesondere aber auch aus den FIGUREN 2 und 3, ersichtlich ist, ist der mittlere Abschnitt 2 zweiteilig ausgebildet, d. h. ein Teil 5 des vorzugsweise zylindrischen Abschnitts 2 ist starr mit den Wellenstümpfen 3 und 4 verbunden, der andere Teil 6 ist über zwei dünne Materialbrücken 7 und 8, die ein Filmscharnier bilden, an den Wickelkörper 1 angebunden. An den beiden Teilen 5 und 6 ausgebildete Kerben 9 und 10 sowie Rippen 11 und 12 bilden eine Kerbverzahnung, die einerseits eine rutschfeste Einspannung des Meßkörperbandes andererseits eine exakte Lagefixierung der beiden Teile 5 und 6 zueinander gestattet.

Wie weiter ersichtlich ist, sind die Teile 5 und 6 in axialer Richtung unterschiedlich lang ausgebildet. Hiermit lassen sich auf einfache Weise zusammen mit geeigneten Freisparungen 13 und 14 die Brücken 7 und 8 anformen. Für die seitliche Führung des Meßkörperbandes ist die Führung lediglich durch das kürzere Teil 5 ausreichend. Mittels der stirnseitig im Wickelkörper 1 angebrachten Kreuzschlitze 15 und 16 ist der Wickelkörper 1 im eingebauten Zustand verdrehbar und somit eine bestimmte Vorspannung im Meßkörper justierbar.

Beim Befestigen des einen Endes 17 des Meßkörpers 18 wird, wie FIGUR 2 zeigt, das Ende 17 vorzugsweise zunächst in den zwischen den Brücken 7 und 8 des Filmscharniers vorgesehenen Schlitz 19 eingefädelt. Danach wird das Teil 6 umgeklappt. Mehrere weitere Umschlingungen des Meßkörperbandes 18 halten, insbesondere wenn der Meßkörper 18 im meßbereiten Zustand unter Vorspannung steht, die beiden Teile 5 und 6 zusammen und bilden den angestrebten Bandwickel 20.

Dem Befestigen des anderen Endes des Meßkörpers 18 dient ein zweiter gemäß FIGUR 3 gestalteter Wickelkörper 21, der ebenfalls einen aus zwei Teilen 22 und 23 bestehenden zylindrischen Abschnitt 24 aufweist. Dieser ist im wesentlichen gleich gestaltet wie der Abschnitt 2, d. h. die beiden Teile 22 und 23 stehen durch Materialbrücken 25 und 26, die ein Filmscharnier bilden miteinander in Verbindung. Zwischen den Brücken 25 und 26 ist ein Schlitz 27 zum Einfädeln des Meßkörperbandes 18 vorgesehen und an den einander zugewandten Flächen der Teile 22 und 23 sind ebenfalls Rippen und Kerben 28, 29, 30, 31 ausgebildet, die eine Kerbverzahnung bilden.

Der dem Aufwickeln des Meßkörpers 18 dienende Abschnitt 24 des Wickelkörpers 21 ist beidseitig begrenzt von Wangen 32 und 33, mittels denen der Wickelkörper 21 verdrehfest in eine passende Fassung in einem nicht dargestellten Bauteil des Gebers beispielsweise in eine schwingungsfähig gelagerte Masse einsetzbar ist. Dabei muß der Bandwickel auf dem Abschnitt 24 bereits vor dem Einsetzten des Wickelkörpers 21 in die Fassung gewickelt werden. Vorzugsweise ist eine in die Fassung eingreifende federnde Zunge vorgesehen, die auf den lose aufgewickelten Bandwickel einwirkt und ein Aufspringen und Lockern der Wicklung vermeidet.

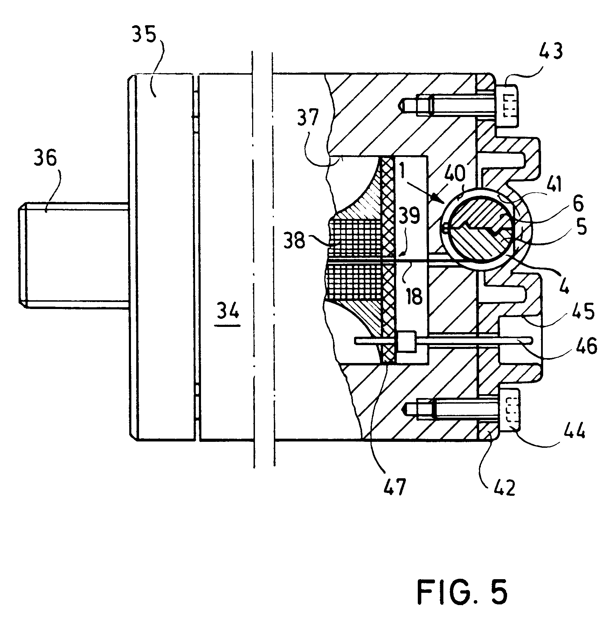

Mit der Figur 5 ist ein Beschleunigungsgeber dargestellt, der beschleunigungsabhängige mechanische Kräfte mittels einer seismischen Masse erfaßt und in eine elektrische Meßgröße wandelt. Der Beschleunigungsgeber weist ein Gehäuse 34 mit einem Deckel 35 auf, an welchem ein Gewindeansatz 36 zur Befestigung des Beschleunigungsgebers beispielsweise an einer Chassiswand eines Fahrzeuges ausgebildet ist.

Der Teilschnitt der FIGUR 5 zeigt eine in einer Öffnung 37 angeordnete Spule 38 durch die in einem möglichst engen Spalt 39 der Meßkörper 18 zum nicht dargestellten Wickelkörper 21 hindurchgreift. Für den Wickelkörper 1 ist im Gehäuse 34 eine erste Lagerschale 40 ausgebildet. Eine zweite Lagerschale 41 ist in einer Abdeckhaube 42 ausgeformt, die beispielsweise mittels Schrauben, von denen in FIGUR 5 zwei - 43 und 44 - dargestellt sind, mit dem Gehäuse 34 verbunden ist. Wie ersichtlich ist die Abdeckhaube 42 im Bereich der Lagerschale 41 federnd ausgebildet, so daß auch nach dem Festschrauben der Abdeckhaube 42 an dem Gehäuse 34 der Wickelkörper 1 vorzugsweise mit einem gewissen Friktionsmoment drehbar und somit die Vorspannung des Meßkörpers 18 justierbar ist. Beim Erreichen der vorgesehenen Vorspannung wird der Wickelkörper 1 mit der Abdeckhaube 42 verschweißt und somit in seiner justierten Lage festgelegt. Dabei ist es zweckmäßig an der Innenseite der Lagerschale 41 rippenförmige Erhöhungen auszubilden die eine lineare Konzentration der Schweißenergie und somit eine definierte Verbindung gewährleisten. Mit 45 ist eine in der Abdeckhaube 42 ausgeformte Steckerfassung bezeichnet; 46 stellt einen von mehreren Steckkontakten dar, die an der Spule 38 bzw. deren Träger 47 befestigt sind und in die Steckerfassung 45 hineinragen. Der der Steckerfassung 45 zugeordnete Stecker kann beispielsweise in einem nicht dargestellten, topfförmigen Gehäuse integriert sein, in welches der Geber zum Zwecke der magnetischen Abschirmung nach dem Justieren des Meßkörpers 18 eingebetet wird.

Zusammenfassend sei nochmals erwähnt, daß an den Wickelkörpern 1 und 21 jeweils die gleichen Mittel für das Einspannen und Festhalten der Enden des Meßkörper 18 vorgesehen sind wobei infolge der Mehrfachumschlingung und unter der Wirkung der für das Messen erforderlichen Vorspannung ein selbsttätiges Festhalten des Meßkörperbandes erfolgt. Mit der Gestaltung des einen Wickelkörpers 21 als nichtdrehbares Teil, welches unter der wirkenden Vorspannung in einer geeigneten Fassung bzw. Kulisse in einem der beiden relativ zueinander beweglichen Bauteile des Gebers gehalten ist sowie dem drehbaren in einer Lagerung in dem anderen Bauteil des Gebers aufgenommenen Wickelkörper 1, der nach dem Justieren der erforderlichen Vorspannung mit der Lagerwand verschweißt wird, ist mit einfachen Mitteln sowohl die Möglichkeit der Justierung als auch eine optimale nichtlösbare, bauliche Integration des Meßkörpers in dem betreffenden Geber geschaffen.

## Patentansprüche

1. Geber zum Messen mechanischer Kräfte mit einem bandförmigen Meßkörper (18) aus amorphem, magnetoelastischen Metall, welcher mit einer Spulenanordnung (38) elektromagnetisch gekoppelt und unter mechanischer Vorspannung zwischen relativ zueinander beweglichen Bauteilen (34, 35) des Gebers angeordnet ist, wobei zur Befestigung des Meßkörpers (18) zwei Wickelkörper (1 bzw. 21) vorgesehen sind, auf denen jeweils ein Ende des Meßkörpers (18) aufgewickelt ist,
dadurch gekennzeichnet,
daß jeder Wickelkörper (1 bzw. 21) wenigstens in einem bestimmten axialen Abschnitt (2 bzw. 24) aus zwei den betreffenden Abschnitt (2 bzw. 24) zu einem vorzugsweise zylindrischen Wickeldorn ergänzenden Teilen (5, 6 bzw. 22, 23) besteht und daß die Teile (5, 6 bzw. 22, 23) jeweils mittels eines Filmscharniers (Materialbrücken 7, 8 bzw. 25, 26) miteinander in Verbindung stehen.

2. Geber nach Anspruch 1,
dadurch gekennzeichnet,
daß an den einander zugewandten Flächen der relativ zueinander beweglichen Wickelkörperteile (5, 6 bzw. 22, 23) eine Kerbverzahnung bildende Rippen (11, 12 bzw. 28, 30) und Kerben (9, 10 bzw. 29, 31) ausgebildet sind.

3. Geber nach Anspruch 1,
dadurch gekennzeichnet,
daß ein Wickelkörper (21) aus dem zweiteiligen vorzugsweise zylindrischen Abschnitt (24) und stirnseitig angeformten nichtzylindrischen Wangen (32. 33) besteht und daß in einem den Wickelkörper (21) aufnehmenden Bauteil (34) des Gebers eine den Wangen (32, 33) zugeordnete Fassung ausgebildet ist.

4. Geber nach Anspruch 1,
dadurch gekennzeichnet,
daß ein Wickelkörper aus dem zweiteiligen vorzugsweise zylindrischen Abschnitt (2) und stirnseitig angeformten zylindrischen Wellenstümpfen (3, 4) besteht und daß in einem den Wickelkörper (1) aufnehmenden Bauteil (34) des Gebers eine erste Lagerschale (40) und in einem mit dem Bauteil (34) des Gebers verbindbaren weiteren Bauteil (42) eine zweite Lagerschale (41) ausgebildet sind.

5. Geber nach Anspruch 4,
dadurch gekennzeichnet,
daß die Lagerschalen (40, 41) in den beiden Bauteilen (34, 42) axial begrenzt ausgebildet sind und daß nach dem Zusammenfügen der Bauteile (34, 42) der eingeschlossene Wickelkörper (1) in Richtung seiner Achse durch wenigstens eine Öffnung zugänglich ist, deren Durchmesser kleiner ist als der Durchmesser der zylindrischen Wellenstümpfe (3, 4).

6. Geber nach Anspruch 1,
dadurch gekennzeichnet,
daß an den mittels Filmscharnieren in Verbindung stehenden und den Jeweiligen Bandwickel aufnehmenden Teilen (5, 6 bzw. 22, 23) der Wickelkörper (1 bzw. 21) der gegenseitigen Verriegelung dienende Schnappelemente ausgebildet sind.

## Claims

1. Detector for measuring mechanical forces, having a strip-shaped measuring body (18) of amorphous magneto-elastic metal, which is electromagnetically coupled to a coil arrangement (38) and is arranged under mechanical pretension between components (34, 35) of the detector which are movable relative to one another, two winding bodies (1 and 21) onto which in each case one end of the measuring body (18) is wound being provided for securing the measuring body (18), characterized in that each winding body (1 or 21) comprises, at least in a certain axial portion (2 or 24), two parts (5, 6 or 22, 23) which complete the relevant portion (2 or 24) to form a preferably cylindrical winding mandrel, and in that the part (5, 6 or 22, 23) are in each case connected to one another by means of a film hinge (material bridges 7, 8 or 25, 26).

2. Detector according to Claim 1, characterized in that ribs (11, 12 and 28, 30) and notches (9, 10 and 29, 31) forming a notch toothing are constructed on the mutually facing faces of the winding body parts (5, 6 and 22, 23), which are movable relative to one another.

3. Detector according to Claim 1, characterized in that a winding body (21) comprises the two-part, preferably cylindrical portion (24) and non-cylindrical cheeks (32, 33) which are integrally formed thereon on the end sides, and in that a holder associated with the cheeks (32, 33) is constructed in a component (34) of the detector receiving the winding body (21).

4. Detector according to Claim 1, characterized in that a winding body comprises the two-part, preferably cylindrical portion (2) and cylindrical shaft ends (3, 4) which are integrally formed thereon on the end sides, and in that a first bearing shell (40) is constructed in a component (34) of the detector receiving the winding body (1) and a second bearing shell (41) is constructed in a further component (42) which can be connected to the component (34) of the detector.

5. Detector according to Claim 4, characterized in that the bearing shells (40, 41) are constructed to be axially delimited in the two components (34, 42), and in that once the components (34, 42) have been joined together the enclosed winding body (1) is accessible in the direction of its axis through at least one opening, whereof the diameter is smaller than the diameter of the cylindrical shaft ends (3, 4).

6. Detector according to Claim 1, characterized in that snap-in elements serving for mutual locking are constructed on the parts (5, 6 and 22, 23) of the winding bodies (1 and 21) which are connected by means of file hinges and receive the respective strip winding.

## Revendications

1. Transmetteur pour la mesure de forces mécaniques à l'aide d'un organe de mesure (18) en forme de bande en un métal magnéto-élastique amorphe qui est couplé, par voie électromagnétique, avec un dispositif à bobine (38) et disposé, avec une précontrainte, entre des composants (34, 35) relativement mobiles l'un par rapport à l'autre du transmetteur, deux mandrins de bobinage (1 ou 21) étant prévus sur lesquels est respectivement enroulée une extrémité de l'organe de mesure (18),
caractérisé par le fait
que chaque mandrin de bobinage (1 ou 21) est constitué, au moins dans un segment axial (2 ou 24) déterminé, de deux parties (5, 6 ou 22, 23) complétant le segment (2 ou 24) concerné pour en faire un mandrin de bobinage de préférence cylindrique et que lesdites parties (5, 6 ou 22, 23) sont assemblées l'une avec l'autre au moyen d'une charnière de pellicule (ponts 7, 8 ou 25, 26).

2. Transmetteur selon la revendication 1,
caractérisé par le fait
que sur les surfaces disposées en regard l'une de l'autre des parties de mandrin de bobinage (5, 6 ou 22, 23) relativement mobiles l'une par rapport à l'autre sont réalisées des nervures (11, 12 ou 28, 30) et des entailles (9, 10 ou 29, 31) formant une denture à cannelures.

3. Transmetteur selon la revendication 1,
caractérisé par le fait
qu'un mandrin de bobinage (21) est constitué du segment (24) en deux parties, de préférence cylindrique et de faces (32, 33) non cylindriques formées frontalement et que dans l'un des composants (34) du transmetteur logeant le mandrin de bobinage (21) est formé un châssis-support associé auxdites faces (32, 33).

4. Transmetteur selon la revendication 1,
caractérisé par le fait
qu'un mandrin de bobinage est constitué du segment (2) en deux parties, de préférence cylindrique, et de tronçons d'arbre (3, 4) cylindriques moulés frontalement et que dans un composant (34) du transmetteur logeant le mandrin de bobinage (1) est formée une première coquille de coussinet (40) et que dans un autre composant (42) pouvant être relié au composant (34) du transmetteur est formée une seconde coquille de coussinet (41).

5. Transmetteur selon la revendication 4,
caractérisé par le fait
que les coquilles de coussinet (40, 41) sont réalisées dans les deux composants (34, 42) avec une limitation axiale et qu'après l'assemblage des composants (34, 42), le mandrin de bobinage (1) inclus est accessible dans le sens de son axe par au moins une ouverture dont le diamètre est inférieur au diamètre des tronçons d'arbre cylindriques (3, 4).

6. Transmetteur selon la revendication 1,
caractérisé par le fait
que sur les parties (5, 6 ou 22, 23) reliées ensemble au moyen de charnières de pellicule et logeant le bobinage correspondant des mandrins de bobinage (1 ou 21) sont formés des éléments d'enclipsage servant au verrouillage réciproque.
